# EUROPEAN PATENT APPLICATION

(11) **EP 4 826 506 A1**
(43) Date of publication of application: **21.10.2026**
(21) Application number: 26172936.2
(22) Date of filing: 17.04.2026
(51) Int. Cl.: G06F 3/0488, G06F 3/01, B60K 35/00

(54) **MULTIMODAL HAPTIC DISPLAY APPARATUS AND METHOD FOR CONTROLLING THE SAME**

(30) Priority: 18.04.2025 KR 20250051051
(71) Applicant: AUMOVIO Germany GmbH, 60488 Frankfurt am Main (DE)
(72) Inventor: Kim, BeomYeong, 339-942 Sejong-si (KR)
(74) Representative: Aumovio Corporation

(57) **Abstract**

A multimodal haptic display apparatus and a method for controlling the same are disclosed. According to one aspect of the present invention, the multimodal haptic display apparatus includes a touch surface equipped with a touch sensor, a plurality of ultrasonic vibration actuators that apply ultrasonic vibrations to the touch surface, so as to control friction, a plurality of mechanical vibration actuators that apply mechanical vibrations to the touch surface to provide concentrated vibrations, and a control unit that controls at least one of the ultrasonic vibration actuators and the mechanical vibration actuators based on information from the touch sensor.

## Description

### [Technical Field]

The present invention relates to a multimodal haptic display apparatus and a method for controlling the same.

### [Background Art of the Invention]

Recent years have seen the development of various haptic feedback technologies for improving the intuitiveness and immersion of a user interface (User Interface, UI) in fields such as smartphones, tablets, virtual reality (VR), augmented reality (AR), vehicular HMIs (Human Machine Interfaces), and medical simulators. In particular, tactile display apparatuses have attracted attention as a means for compensating for the limitations of digital interfaces centered on visual and auditory modalities.

Conventional tactile display apparatuses generally used mechanical vibration actuators to transmit low-frequency vibrations (tens of Hz to hundreds of Hz) to a user's skin, thereby providing simple tactile stimuli such as a button click sensation, edge sensation, and tapping. Representative vibration actuators include eccentric rotating mass (ERM) actuators, linear resonant actuators (LRA), and voice-coil-based actuators.

However, such mechanical vibration-based technologies have limitations in that it is difficult to control the directionality of vibrations, the spatial resolution is low, and complex tactile sensations (e.g., texture, friction, and surface resistance) are difficult to represent.

The background art of the present invention is disclosed in Korean Patent Publication No. 10-2010-0039194 (April 15, 2010).

### [Summary of Invention]

### [Problem to Be Solved]

The present invention has been devised to improve the above-described problem(s), and an object of the present invention is to provide a multimodal haptic display apparatus capable of controlling surface friction and providing haptic feedback, and a method for controlling the same.

The problem(s) to be solved by the present invention are not limited to the above-mentioned problem(s), and other problem(s) not mentioned will be clearly understood by those skilled in the art from the following description.

### [Means for Solving the Problem]

According to one aspect of the present invention, a multimodal haptic display apparatus comprises: a touch surface having a touch sensor; a plurality of ultrasonic vibration actuators configured to control friction by applying ultrasonic vibrations to the touch surface; a plurality of mechanical vibration actuators configured to provide concentrated vibrations by applying mechanical vibrations to the touch surface; and a control unit configured to control at least one of the ultrasonic vibration actuators and the mechanical vibration actuators based on information from the touch sensor.

In the present invention, each of the plurality of ultrasonic vibration actuators is configured to generate the ultrasonic vibrations at a resonance frequency and to control friction of the touch surface by forming an air gap between a user's finger and the touch surface.

In the present invention, when the plurality of ultrasonic vibration actuators are driven at different resonance frequencies, they provide different textures of different materials.

In the present invention, each of the plurality of mechanical vibration actuators applies mechanical vibrations having different amplitudes to the touch surface, and the applied mechanical vibrations overlap at a position where a user's finger touches.

In the present invention, the control unit is configured to control at least one of the ultrasonic vibration actuators and the mechanical vibration actuators based on pressure caused by contact when a user's finger contacting the touch surface is detected.

In the present invention, the control unit compares the pressure caused by the contact with a preset threshold pressure, and when the pressure caused by the contact is less than the threshold pressure as a result of the comparison, the control unit applies ultrasonic vibrations to the touch surface through the ultrasonic vibration actuators, so as to control friction.

In the present invention, when the pressure caused by the contact is greater than or equal to the threshold pressure, the control unit provides concentrated vibrations by applying mechanical vibrations to the touch surface through the mechanical vibration actuators.

According to another aspect of the present invention, a method for controlling a multimodal haptic display apparatus, the multimodal haptic display apparatus including a touch surface having a touch sensor, a plurality of ultrasonic vibration actuators, a plurality of mechanical vibration actuators, and a control unit, includes: measuring, by the control unit, pressure caused by contact through the touch sensor when contact of a user's finger with the touch surface is detected; and controlling, by the control unit, at least one of the ultrasonic vibration actuators and the mechanical vibration actuators based on the measured pressure.

In the controlling step, the control unit compares the measured pressure with a preset threshold pressure, and when the measured pressure is less than the threshold pressure according to a result of the comparison, the control unit applies ultrasonic vibrations to the touch surface through the ultrasonic vibration actuators, so as to control friction.

In the controlling step, when the measured pressure is greater than or equal to the threshold pressure, the control unit provides concentrated vibrations by applying mechanical vibrations to the touch surface through the mechanical vibration actuators.

### [Effect of Invention]

A multimodal haptic display apparatus and a method for controlling the same according to one embodiment of the present invention can control surface friction through ultrasonic vibrations by combining ultrasonic vibration actuators and mechanical vibration actuators, and thus a user can experience various levels of resistance and slipping, thereby improving a tactile experience.

A multimodal haptic display apparatus and a method for controlling the same according to one embodiment of the present invention can simulate tactile sensations such as a feeling of pressing a button through localized vibrations by combining ultrasonic vibration actuators and mechanical vibration actuators, thereby improving user interaction with the display.

A multimodal haptic display apparatus and a method for controlling the same according to one embodiment of the present invention can provide adjustable friction and realistic tactile feedback, thereby improving usability and convenience in applications in which visual attention may be limited, such as automotive interfaces.

A multimodal haptic display apparatus and a method for controlling the same according to one embodiment of the present invention can provide a more immersive and intuitive user interface by directly integrating haptic feedback into a display surface.

Meanwhile, the effects of the present invention are not limited to the above-mentioned effects, and various effects may be included within a scope that will be apparent to those skilled in the art from the following description.

### [Brief Description of the Drawings]

FIG. 1 is a block diagram schematically illustrating a configuration of a multimodal haptic display apparatus according to one embodiment of the present invention.
FIG. 2 is a perspective view of a multimodal haptic display apparatus according to one embodiment of the present invention.
FIG. 3 is an exemplary view for explaining an operation of an ultrasonic vibration actuator according to one embodiment of the present invention.
FIG. 4 is an exemplary view for explaining friction control according to an operation of the ultrasonic vibration actuator according to one embodiment of the present invention.
FIG. 5 is an exemplary view for explaining an operation of a mechanical vibration actuator according to one embodiment of the present invention.
FIG. 6 is an exemplary view for explaining vibration control according to an operation of the mechanical vibration actuator according to one embodiment of the present invention.

### [Embodiments of Invention]

Hereinafter, with reference to the accompanying drawings, a multimodal haptic display apparatus and a method for controlling the same according to one embodiment of the present invention will be described. In this process, thicknesses of lines or sizes of components illustrated in the drawings may be exaggerated for clarity and convenience of description.

In addition, the terms described below are terms defined in consideration of functions in the present invention, and may vary depending on the intention or custom of a user or operator. Therefore, definitions of these terms should be made based on the contents throughout the present specification.

In addition, implementations described in the present specification may be implemented, for example, as a method or process, an apparatus, a software program, a data stream, or a signal. Even when discussed only in the context of a single form of implementation (for example, discussed only as a method), an implementation of the discussed features may also be implemented in other forms (for example, an apparatus or a program). An apparatus may be implemented with appropriate hardware, software, firmware, or the like. A method may be implemented in a device such as a processor generally referring to a processing device including, for example, a computer, a microprocessor, an integrated circuit, or a programmable logic device. The processor may also include communication devices such as computers, cellular phones, portable/personal information terminals (personal digital assistants: "PDAs"), and other devices that facilitate communication of information between end users.

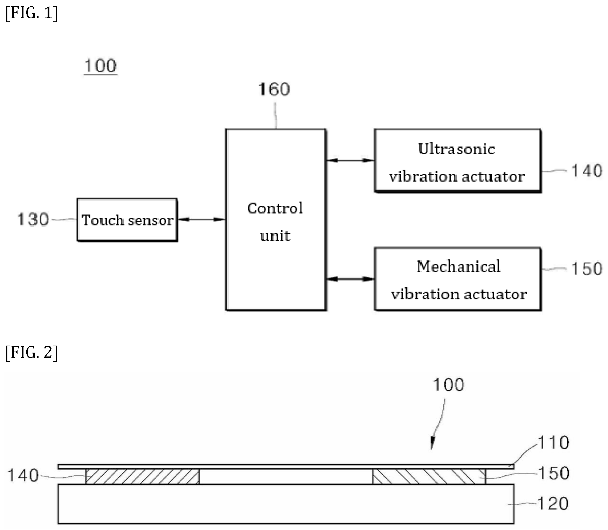

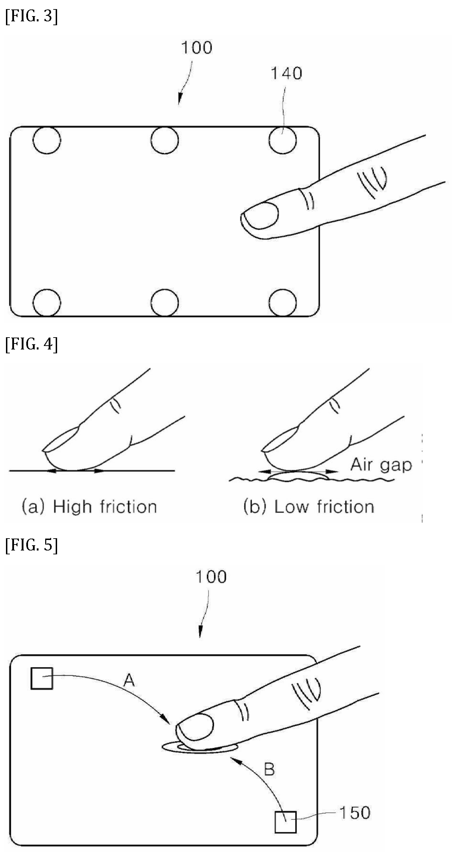

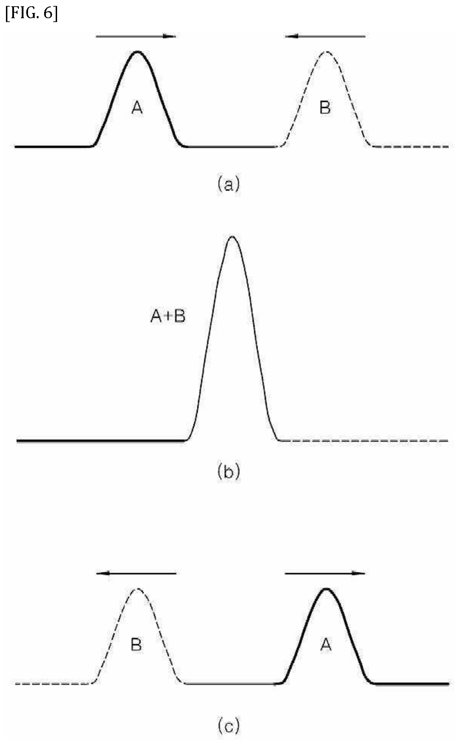

FIG. 1 is a block diagram schematically illustrating a configuration of a multimodal haptic display apparatus according to one embodiment of the present invention, FIG. 2 is a perspective view of the multimodal haptic display apparatus according to one embodiment of the present invention, FIG. 3 is an exemplary view for explaining an operation of an ultrasonic vibration actuator according to one embodiment of the present invention, FIG. 4 is an exemplary view for explaining friction control according to the operation of the ultrasonic vibration actuator according to one embodiment of the present invention, FIG. 5 is an exemplary view for explaining an operation of a mechanical vibration actuator according to one embodiment of the present invention, and FIG. 6 is an exemplary view for explaining vibration control according to the operation of the mechanical vibration actuator according to one embodiment of the present invention.

Referring to FIGS. 1 and 2, a multimodal haptic display apparatus (100) according to one embodiment of the present invention may include a touch surface (110), a plate (120) to which the touch surface (110) is coupled, a plurality of ultrasonic vibration actuators (140), a plurality of mechanical vibration actuators (150), and a control unit (160).

The touch surface (110) may display various graphic objects to a user. The touch surface (110) is provided with a touch sensor (130), and the touch sensor (130) may detect a user's contact with the touch surface (110), for example, a touch by a finger.

The touch surface (110) has its four ends fixed to the plate (120) and is installed so as to cover the plate (120), thereby serving to protect the plate (120) from external impact. In one embodiment, the touch surface (110) may be implemented as glass, a thin film, or a film. For example, it may be made of a Mylar material composed of an adhesive polyester film, but is not limited thereto.

The touch sensor (130) detects a touch of a predetermined object such as a human finger or a stylus, and detects a contact force. When the touch sensor (130) detects a touch or contact force, the control unit (160) may form an operation signal for driving the ultrasonic vibration actuator (140) or the mechanical vibration actuator (150) and may control the ultrasonic vibration actuator (140) or the mechanical vibration actuator (150). The touch sensor (130) may include a contact resistance sensor, a capacitive sensor, a piezoelectric sensor, an optical sensor, or the like capable of detecting a touch or contact force.

The plate (120) has a substantially rectangular shape having a predetermined thickness and may be formed in the same planar shape as the touch surface (110). The plate (120) may form the exterior of the multimodal haptic display apparatus (100) and may fix the touch surface (110). A seating groove (not illustrated) in which the touch surface (110) is seated may be formed in the plate (120). The touch surface (110) may be seated in the seating groove of the plate (120) and fixed to a front surface of the plate (120).

A plurality of ultrasonic vibration actuators (140) and a plurality of mechanical vibration actuators (150) may be formed on an upper portion of the plate (120).

The plurality of ultrasonic vibration actuators (140) may control friction by applying ultrasonic vibrations to the touch surface (110).

Each ultrasonic vibration actuator (140) generates ultrasonic vibrations at a resonance frequency and may control friction of the touch surface (110) by forming an air gap between a user's finger and the touch surface (110).

The plurality of ultrasonic vibration actuators (140) are spaced apart from each other and may be individually driven.

The ultrasonic vibration actuator (140) may vertically vibrate the touch surface (110) at an ultrasonic frequency (20-40 kHz or higher) using a piezoelectric transducer. The ultrasonic vibrations may control friction by forming a thin air film between the finger and the touch surface (110).

The ultrasonic vibration actuator (140) may enrich a user experience on a flat surface by variously controlling friction of the touch surface (110) through a squeeze film effect.

The ultrasonic vibration actuator (140) operates most efficiently at a specific resonance frequency, and under resonance conditions the amplitude increases, enabling stronger vibrations to be transmitted.

The ultrasonic vibration actuator (140) may operate continuously, or may operate when a user's finger contacts the touch surface (110). When the ultrasonic vibration actuator (140) is in an operating state, the ultrasonic vibration actuator (140) may variably control friction of the touch surface (110) when a user rubs the vibrating touch surface (110).

As illustrated in FIG. 3, when a finger contact with the touch surface (110) is detected, the control unit (160) may apply a voltage to the ultrasonic vibration actuator (140). Then, the ultrasonic vibration actuator (140) generates ultrasonic vibrations at a resonance frequency to vibrate the touch surface (110). When the ultrasonic vibrations vibrate the touch surface (110), an ultra-thin air layer (air gap) is formed between the finger and the touch surface (110) as illustrated in FIG. 4(b), and the ultra-thin air layer may control friction of the touch surface (110). That is, the ultra-thin air layer (Air gap) minimizes direct contact between the finger and the touch surface (110), and performs a function similar to a lubrication layer through an elastic force of compressed air, thereby significantly reducing friction of the touch surface (110). Accordingly, the user experiences a friction sensation lower than an inherent friction characteristic of the surface material and may perceive a more slippery tactile experience.

Since the ultrasonic vibration actuator (140) is driven at a resonance frequency and causes displacement in the touch surface (110), an air gap may be formed between the finger and the touch surface (110).

When a user rubs the touch surface (110) using a finger, the control unit (160) may adjust an amplitude of a wave of the ultrasonic vibration actuator (140) so that friction sensations ranging from very slippery friction to rough friction may be perceived.

The ultrasonic vibration actuator (140) may be expanded to a rendering technique in which it is driven at multiple frequencies rather than only at a specific resonance frequency. An advanced rendering method may imitate textures of various materials (e.g., metal, rubber, wood, etc.) and may allow boundaries and contours of buttons to be drawn. That is, when each ultrasonic vibration actuator (140) is driven at different resonance frequencies, different textures may be perceived as if they were different materials.

Such ultrasonic vibration actuators (140) may be implemented, for example, as piezoelectric elements or piezoelectric actuators including piezoelectric materials.

The plurality of mechanical vibration actuators (150) may provide concentrated vibrations by applying mechanical vibrations to the touch surface (110). That is, each mechanical vibration actuator (150) applies mechanical vibrations having different amplitudes to the touch surface (110), and the applied mechanical vibrations overlap at a position where a user's finger touches, thereby providing concentrated vibrations.

The plurality of mechanical vibration actuators (150) may transmit direct physical vibrations to the finger.

As illustrated in FIG. 5, when a user presses the touch surface (110) with a finger, the control unit (160) may check a position of the finger through the touch sensor (130) and may control the mechanical vibration actuators (150) to generate waveforms having different amplitudes. Then, the mechanical vibration actuators (150) may generate different waveforms as illustrated in FIG. 6(a). Then, the control unit (160) may superimpose the different waveforms at the position of the finger as illustrated in FIG. 6(b). That is, voltage is applied to all (two) mechanical vibration actuators (150) so that they operate, and two voltage signals may be combined at the finger position. Thereafter, when the finger is released from the touch surface (110), the waveforms may be separated into different waveforms as illustrated in FIG. 6(c).

By precisely controlling a temporal phase and an intensity of vibrations, the mechanical vibration actuator (150) may cause a user's sensory system to mistake a flat surface for an actual button pressing action. This is based on a cognitive science principle of inducing an illusion in which spatiotemporal patterns of sensory stimuli resemble past tactile experiences. Differences in vibration time, vibration intensity, vibration period, and vibration frequency among the respective mechanical vibration actuators (150) disposed on the flat surface may be continuously controlled.

The mechanical vibration actuator (150) may receive an electrical signal and move a coil or a magnet to apply vibrations to a structure. In this case, a frequency of the vibrations may be 10-500 Hz, and an amplitude of the vibrations may be limited to a level perceptible to human skin (e.g., several tens to several hundreds of µm).

The mechanical vibration actuator (150) may cause a vibration intensity at a desired point to reach a peak and may induce localized vibrations. When a user touches a button on a flat cluster, strong vibrations may be generated at the corresponding point to provide tactile feedback to the user.

The mechanical vibration actuator (150) may operate using a sine wave, square wave, triangle wave, or a composite waveform.

The mechanical vibration actuator (150) may represent buttons, boundaries, and a sense of weight using low frequencies (e.g., 10-100 Hz). By adjusting amplitude, the mechanical vibration actuator (150) may distinguish between a strong click and a weak vibration. Through duration control, the mechanical vibration actuator (150) may provide a boundary/click sensation with a short waveform and a resonance/vibration effect with a long waveform.

The mechanical vibration actuator (150) may simulate a feeling of a push button having various pressing textures through an advanced rendering method.

The mechanical vibration actuator (150) may be implemented as an LRA (Linear Resonant Actuator), a voice coil, an ERM (Eccentric Rotating Mass), or the like.

The mechanical vibration actuators (150) are spaced apart from each other and may be individually driven. Since the mechanical vibration actuators (150) are individually driven to generate vibrations, localized vibrations may be generated in portions where haptic feedback is required, thereby minimizing power required to provide the haptic feedback.

Further, by arranging a plurality of mechanical vibration actuators (150) across an entire area of the apparatus, uniform haptic feedback may be provided regardless of an area of the display apparatus (100).

The control unit (160) may control at least one of the ultrasonic vibration actuators (140) and the mechanical vibration actuators (150) based on information from the touch sensor (130).

The control unit (160) may generate ultrasonic vibrations that produce a squeeze film effect on the touch surface (110) by controlling vibration characteristics of the ultrasonic vibration actuators (140). Ultrasonic vibrations generated by independent vibrations of the plurality of ultrasonic vibration actuators (140) interfere with each other, and accordingly standing waves may occur at specific positions on the touch surface (110). The generated standing wave vibrations are symmetric with each other, and peaks and troughs of the waves are generally repeatedly formed according to polarity of piezoelectric elements of the ultrasonic vibration actuators (140).

In this case, the control unit (160) may generate standing waves of various forms on the touch surface (110) by controlling three voltage application conditions-phase difference, amplitude, and frequency-of each ultrasonic vibration actuator (140) using the vibration characteristics. Further, the control unit (160) may control the ultrasonic vibration actuators (140) so that standing wave vibrations occur at a portion where a user's finger contacts. In order to form standing wave vibrations at a position where the user's finger contacts, the control unit (160) may calculate the phase difference, amplitude, and frequency of each ultrasonic vibration actuator (140). The calculated phase difference values, amplitudes, and frequencies are converted into voltages to be applied to the ultrasonic vibration actuators (140), and the ultrasonic vibration actuators (140) may vibrate in response to characteristics of the applied voltages. Accordingly, standing wave vibrations occur at a position where the user's finger contacts, thereby producing the squeeze film effect between the user's finger and the touch surface (110), and friction between the finger and the touch surface (110) is reduced. At this time, the larger a vibration amplitude of the ultrasonic vibration actuator (140), the greater a degree of reduction in friction felt by the user may be.

The control unit (160) may individually control vibrations of the mechanical vibration actuators (150) according to a position where a touch is detected. Specifically, when a touch is detected between the plurality of mechanical vibration actuators (150), the control unit (160) may generate compensating interference so that amplitudes of vibrations generated by two or more mechanical vibration actuators (150) disposed around the detected touch position have a maximum value at the portion where the touch is detected.

Vibrations generated by the plurality of mechanical vibration actuators (150) propagate in the form of waves and may overlap with each other in intermediate regions. The overlapped waves may increase in amplitude or may be canceled and decrease due to compensation depending on frequency and phase.

That is, when frequencies and phases are adjusted so that maximum amplitude points coincide while enabling compensation between the plurality of waves, the amplitude increases, thereby enabling efficient vibration generation even with low power.

Waves generated by the plurality of mechanical vibration actuators (150) overlap with each other at a portion where the touch is detected, and since maximum amplitude points of the waves coincide at the portion where the touch is detected, the amplitude has a maximum value.

According to another embodiment of the present invention, when contact of a user's finger with the touch surface (110) is detected, the control unit (160) may control at least one of the ultrasonic vibration actuator (140) and the mechanical vibration actuator (150) based on pressure caused by the contact. That is, when contact of the user's finger with the touch surface (110) is detected, the control unit (160) may determine whether the pressure caused by the contact is greater than or equal to a preset threshold pressure. When the pressure caused by the contact is less than the threshold pressure, the control unit (160) may apply ultrasonic vibrations to the touch surface (110) through the ultrasonic vibration actuator (140), so as to control friction. At this time, the ultrasonic vibration actuator (140) may generate ultrasonic vibrations by vertically vibrating the touch surface (110) at an ultrasonic frequency (20-40 kHz or higher) using a piezoelectric transducer, and the ultrasonic vibrations may control friction by forming a thin air film between the finger and the touch surface (110).

When the pressure caused by the contact is greater than or equal to the threshold pressure, the control unit (160) may provide concentrated vibrations by applying mechanical vibrations to the touch surface (110) through the mechanical vibration actuator (150). At this time, the control unit (160) may check a position of the finger through the touch sensor (130) and may control the mechanical vibration actuators (150) to generate waveforms having different amplitudes. Then, the mechanical vibration actuators (150) generate different waveforms, and the different waveforms may overlap at the position of the finger.

In addition, friction/vibration feedback may be dynamically adjusted according to continuous changes in contact pressure or a movement speed of the finger. Accordingly, the control unit (160) may control at least one of the ultrasonic vibration actuator (140) and the mechanical vibration actuator (150) based on at least one of a magnitude of pressure of the finger, a contact area, and a movement speed. In this case, the control unit (160) may provide more complex and realistic haptic feedback by applying continuous ultrasonic vibration control or localized concentrated mechanical vibrations in combination. Through this, the control unit (160) may provide a context-responsive tactile experience.

Meanwhile, the control unit (160) is operatively coupled to the touch sensor (130), the ultrasonic vibration actuator (140), and the mechanical vibration actuator (150), and may be implemented as an integrated circuit or system configured to control an overall operation of the multimodal haptic display apparatus (100).

The control unit (160) may control an overall operating state of the multimodal haptic display apparatus (100). The control unit (160) may refer to a data processing device embedded in hardware having physically structured circuits for performing functions represented by codes or instructions included in a program. Examples of such a hardware-embedded data processing device may include processing devices such as a microprocessor, a central processing unit (CPU), a processor core, a multiprocessor, an ASIC (application-specific integrated circuit), and an FPGA (field programmable gate array), but the scope of the present invention is not limited thereto.

Meanwhile, the multimodal haptic display apparatus (100) configured as described above may be used for enhanced navigation controls, virtual buttons and knobs, feedback for vehicle controls, safety warnings and notifications, interactive control surfaces, and driver profile customization.

Enhanced navigation controls may provide tactile feedback for touch-based navigation controls. For example, a driver may receive tactile feedback when interacting with on-screen navigation buttons or sliders, such as when zooming in or out of a map. In this way, the system physically confirms inputs through various levels of friction and tactile sensations, thereby reducing the need to look at the screen. Accordingly, the driver may keep his or her eyes on the road while interacting with the navigation system, thereby improving driving safety.

Virtual buttons and knobs may dynamically generate virtual buttons or knobs on the display by adjusting friction and tactile feedback. For example, an infotainment system may simulate a feeling of physical buttons or rotary knobs on a flat touchscreen. For instance, when adjusting volume or changing radio stations, the user may feel a "click" of a virtual button or resistance of a virtual dial. Through this, a more intuitive and familiar user experience may be provided without requiring physical controls, while also providing a customizable interface that may be adjusted according to various driver preferences.

Feedback for vehicle controls may provide tactile feedback for climate control, seat settings, and other vehicle systems. For example, when adjusting climate control or seat settings through an infotainment screen, a driver may experience tactile feedback similar to turning a physical dial or pressing a button. This may be particularly useful for settings that require frequent adjustments. Accordingly, the interaction with the interface may be made more natural, and clear, and specific feedback may be provided, thereby improving the user experience.

Safety warnings and notifications may notify the driver of important alerts or warnings using tactile feedback. For example, the system may provide tactile alerts for low fuel, maintenance reminders, or safety warnings (e.g., lane departure warnings) through vibrations or changes in display friction. For instance, rapid vibrations may indicate an urgent warning, whereas more subtle feedback may indicate a less critical notification. Through this, important information may be effectively delivered even when a driver's attention is divided between the road and the infotainment system.

Interactive control surfaces may provide customizable control surfaces on an infotainment screen that change according to a context or application in use. For example, during a phone call, the display may switch to show virtual buttons for answering or ending a call with haptic feedback that imitates real buttons. In a media playback mode, the user may feel different textures for play, pause, and skip functions. Accordingly, a flexible and adaptive interface that changes depending on the current function or application may be provided, thereby making interactions more efficient and contextually appropriate.

Driver profile customization may set personalized haptic feedback according to driver preferences. For example, a driver may customize an intensity and type of haptic feedback for various controls and notifications, thereby providing a personalized experience suited to individual preferences or requirements. Accordingly, the tactile experience may be user-defined, thereby improving driver convenience and usability and making the system more intuitive and user-friendly.

As described above, the multimodal haptic display apparatus and the method for controlling the same according to the present embodiment can control surface friction through ultrasonic vibrations by combining ultrasonic vibration actuators and mechanical vibration actuators. Through this, a user may experience various levels of resistance and slipping, thereby improving a tactile experience.

The multimodal haptic display apparatus and the method for controlling the same according to the present embodiment can simulate tactile sensations such as a feeling of pressing a button through localized vibrations by combining ultrasonic vibration actuators and mechanical vibration actuators, thereby improving user interaction with the display.

The multimodal haptic display apparatus and the method for controlling the same according to the present embodiment can provide adjustable friction and realistic tactile feedback, thereby improving usability and convenience in applications in which visual attention may be limited, such as automotive interfaces.

The multimodal haptic display apparatus and the method for controlling the same according to the present embodiment can provide a more immersive and intuitive user interface by directly integrating haptic feedback into a display surface.

Although the present invention has been described with reference to embodiments illustrated in the drawings, these are merely illustrative. Those skilled in the art will understand that various modifications and equivalent other embodiments may be made therefrom. Accordingly, the true technical scope of protection of the present invention should be defined by the following claims.

### [Description of Reference Numerals]

100 : Multimodal haptic display apparatus
110 : Touch surface
120 : Plate
130 : Touch sensor
140 : Ultrasonic vibration actuator
150: Mechanical vibration actuator
160 : Control unit

## Claims

1. A multimodal haptic display apparatus, comprising:
a touch surface including a touch sensor;
a plurality of ultrasonic vibration actuators configured to control friction by applying ultrasonic vibrations to the touch surface;
a plurality of mechanical vibration actuators configured to provide concentrated vibrations by applying mechanical vibrations to the touch surface; and
a control unit configured to control at least one of the ultrasonic vibration actuators and the mechanical vibration actuators based on information from the touch sensor.

2. The multimodal haptic display apparatus
according to claim 1, wherein
each of the plurality of ultrasonic vibration actuators generates the ultrasonic vibrations at a resonance frequency and forms an air gap between a user finger and the touch surface to control the friction of the touch surface.

3. The multimodal haptic display apparatus
according to claim 1, wherein
the plurality of ultrasonic vibration actuators, when driven at different resonance frequencies, provide different textures of different materials.

4. The multimodal haptic display apparatus
according to claim 1, wherein
each of the plurality of mechanical vibration actuators applies mechanical vibrations having different amplitudes to the touch surface, and the applied mechanical vibrations overlap at a position where a user finger touches.

5. The multimodal haptic display apparatus
according to claim 1, wherein
the control unit, upon detecting contact of a user finger with the touch surface, controls at least one of the ultrasonic vibration actuators and the mechanical vibration actuators based on pressure caused by the contact.

6. The multimodal haptic display apparatus
according to claim 5, wherein
the control unit compares the pressure caused by the contact with a preset threshold pressure, and when the pressure caused by the contact is less than the threshold pressure according to a result of the comparison, applies ultrasonic vibrations to the touch surface through the ultrasonic vibration actuators, so as to control friction.

7. The multimodal haptic display apparatus
according to claim 6, wherein
the control unit, when the pressure caused by the contact is greater than or equal to the threshold pressure, applies mechanical vibrations to the touch surface through the mechanical vibration actuators to provide concentrated vibrations.

8. A method for controlling a multimodal haptic display apparatus including
a touch surface having a touch sensor, a plurality of ultrasonic vibration actuators, a plurality of mechanical vibration actuators, and a control unit, the method comprising:
measuring, by the control unit, upon detecting contact of a user finger with the touch surface, pressure caused by the contact through the touch sensor; and
controlling, by the control unit, at least one of the ultrasonic vibration actuators and the mechanical vibration actuators based on the measured pressure.

9. The method for controlling a multimodal haptic display apparatus
according to claim 8, wherein,
the controlling further comprises:
comparing, by the control unit, the measured pressure with a preset threshold pressure; and applying, when the measured pressure is less than the threshold pressure according to a result of the comparison, ultrasonic vibrations to the touch surface through the ultrasonic vibration actuators, so as to control friction.

10. The method for controlling a multimodal haptic display apparatus
according to claim 9, wherein,
the controlling further comprises: applying, when the measured pressure is greater than or equal to the threshold pressure, mechanical vibrations to the touch surface through the mechanical vibration actuators to provide concentrated vibrations.
